# EUROPÄISCHE PATENTANMELDUNG

(11) **EP 1 239 633 A2**
(43) Veröffentlichungstag der Anmeldung: **11.09.2002**
(21) Anmeldenummer: 02100136.7
(22) Anmeldetag: 14.02.2002
(51) Int. Cl.: H04L 12/46

(54) **Netzwerk mit mehreren über Brückenterminals verbindbaren Sub-Netzwerken**

(30) Priorität: 16.02.2001 DE 10107816
(71) Anmelder: Philips Corporate Intellectual Property GmbH, 52064 Aachen (DE); Koninklijke Philips Electronics N.V., 5621 BA Eindhoven (NL)
(72) Erfinder: Peetz, Jörg, 52066, Aachen (DE)
(74) Vertreter: Volmer, Georg, Dipl.-Ing.

(57) **Zusammenfassung**

Die Erfindung bezieht sich auf ein Netzwerk mit mehreren Sub-Netzwerken, die jeweils Terminals enthalten und die untereinander über wenigstens ein Brücken-Terminal Daten austauschen. Ein zur Steuerung eines Sub-Netzwerks vorgesehener Controller zur bindet wenigstens ein weiteres Brücken-Terminal zur Übertragung von Daten zwischen wenigstens zwei Sub-Netzwerken ein. De Brücken-Terminals sind dabei während bestimmter Perioden mit nur einem Sub-Netzwerk synchronisiert.

## Beschreibung

Die Erfindung bezieht sich auf ein Netzwerk mit mehreren Sub-Netzwerken, die jeweils Terminals enthalten. Jedes Sub-Netzwerk enthält einen Controller zur Steuerung eines Sub-Netzwerkes. Ein solches Netzwerke ist selbstorganisierend und wird auch als Adhoc-Netzwerk bezeichnet.

Aus dem Dokument "Broadband Radio Access Networks (BRAN), HIPERLAN Type 2; ,Functional Specifications; Data Link Control (DLC) Layer; Part 4: Extension for Home Environment', DTS 101 761-4, ETSI, Apr. 2000.", ist ein Adhoc-Netzwerk mit mehreren Terminals bekannt. Wenigstens ein Terminal ist als Controller zur Steuerung des Adhoc-Netzwerkes vorgesehen. Unter bestimmten Bedingungen kann es erforderlich sein, dass ein anderes Terminal Controller wird Falls ein solches Netzwerk eine bestimmte Größe erreicht, ist die Einteilung in Sub-Netzwerke erforderlich. Zur Kommunikation mit den Sub-Netzwerken dient jeweils ein als Brücken-Terminals ausgestaltetes Terminal.

Der Erfindung liegt die Aufgabe zugrunde, ein Netzwerk zu schaffen, welches bei bestimmten Lastsituationen einen erhöhten Datendurchsatz zwischen wenigstens zwei Sub-Netzwerken ermöglicht.

Die Aufgabe wird durch ein Netzwerk der eingangs genannten Art durch folgende Maßnahmen gelöst:
Das Netzwerk weist mehrere Sub-Netzwerke auf, die jeweils Terminals enthalten und die untereinander über wenigstens ein Brücken-Terminal Daten austauschen,
wobei ein zur Steuerung eines Sub-Netzwerks vorgssehener Controller zur Einbindung wenigstens ein weiteres Brücken-Terminal zur Übertragung von Daten zwischen wenigstens zwei Sub-Netzwerken vorgssehen ist und
wobei die Brücken-Terminals während bestimmter Perioden mit nur einem Sub-Netzwerk synchronisiert sind

Das erfindungsgemäße Netzwerk enthält zur Verbindung von beispielsweise zwei Sub-Netzwerken mindestens zwei Brücken-Terminals, um bei bestimmten Lastsituationen den Datendurchsatz zwischen zwei Sub-Netzwerken zu erhöhen. Ein Sub-Netzwerk kann, wenn nur ein Brücken-Terminal zwei Sub-Netzwerke verbindet, ein Terminal für einen Einsatz als Brücken-Terminal auswählen, welches sich dann abwechselnd mit den beiden Sub-Netzwerken synchronisiert. Ein Brücken-Terminal kann dabei jeweils über eine weitgehend gleiche Zeitdauer mit wenigstens zwei Sub-Netzwerken synchronisiert sein.

Anspruch 3 bezieht sich auf verschiedene Nachrichten, die während eines Wechsels der Sub-Netzwerke ausgetauscht werden.

Die Erfindung bezieht sich auch auf ein Brücken-Terminal in einem Netzwerk mit mehreren Sub-Netzwerken, das zusammen mit wenigstens einem weiteren Brücken-Terminal zum Austausch von Daten zwischen den Sub-Netzwerken vorgesehen ist.

Ausführungsbeispiele der Erfindung werden nachstehend anhand der Figuren näher erläutert.
Es zeigen:
- Fig 1: ein Adhoc-Netzwerk mit drei Sub-Netzwerken, die jeweils zur Funkübertragung vorgssehene Terminals enthalten,
- Fig. 2: ein Terminal des lokalen Netzwerks nach Fig 1,
- Fig. 3: eine Funkvorrichtung des Terminals nach Fig. 2,
- Fig. 4: eine Ausführung eines zur Verbindung von zwei Sub-Netzwerken vorgesehenen Brücken-Terminals.
- Fig. 5: MAC-Rahmen von zwei Sub-Netzwerken und die MAC-Rahmenstruktur eines Brücken-Terminals und
- Fig. 6: MAC-Rahmen von zwei Sub-Netzwerken und die MAC-Rahmenstruktur von zwei Brücken-Terminals.

Das im folgenden dargestellte Ausführungsbeispiel bezieht sich auf Adhoc-Netzwerke, die im Gegensatz zu traditionellen Netzwerken selbstorganisierend sind Jedes Terminal in einem solchen Adhoc-Netzwerk kann einen Zugang zu einem Fest-Netzwerk ermöglichen und ist sofort einsetzbar. Ein Adhoc-Netzwerk ist dadurch gekennzeichnet, dass die Struktur und die Anzahl von Teilnehmern innerhalb vorgegebener Grenzwerte nicht festgelegt ist. Beispielsweise kann eine Kommunikationsvorrichtung eines Teilnehmers aus dem Netzwerk genommen oder eingebunden werden. Im Gegensatz zu traditionellen Mobilfunknetzen ist ein Adhoc-Netzwerk nicht auf eine fest installierte Infrastruktur angewiesen.

Die Größe der Fläche des Adhoc-Netzwerkes ist in der Regel sehr viel größer als der Übertragungsbereich von einem Terminal. Eine Kommunikation zwischen zwei Terminals kann daher die Einschaltung weiterer Terminals erforderlich machen, damit diese Nachrichten oder Daten zwischen den beiden kommunizierenden Terminals übertragen können. Solche Adhoc-Netzwerke, bei denen eine Weiterleitung von Nachrichten und Daten über ein Terminal notwendig ist, werden als Multihop-Adhoc-Netzwerke bezeichnet. Eine mögliche Organisation eines Adhoc-Netzwerkes besteht darin, regelmäßig Sub-Netzwerke oder Cluster zu bilden. Ein Sub-Netzwerk des Adhoc-Netzwerks kann beispielsweise durch über Funkstrecken verbundene Terminals von um einen Tisch sitzenden Teilnehmern gebildet werden. Solche Terminals können z.B. Kommunikationsvorrichtungen zum drahtlosen Austausch von Dokumenten, Bildern usw. sein.

Es lassen sich zwei Typen von Adhoc-Netzwerken angeben. Das sind dezentralisierte und zentralisierte Adhoc-Netzwerke. In einem dezentralisierten Adhoc-Netzwerk ist die Kommunikation zwischen den Terminals dezentralisiert, d.h. jedes Terminal kann mit jedem anderen Terminal unter der Voraussetzung direkt kommunizieren, dass die Terminals jeweils in dem Übertragungsbereich des anderen Terminals liegen. Der Vorteil eines dezentralisierten Adhoc-Netzwerks ist dessen Einfachheit und Robustheit gegen Fehler. Bei einem zentralisierten Adhoc-Netzwerk werden bestimmte Funktionen, wie z.B. die Funktion des Mehrfachzugriffs eines Terminals zum Funkübertragungsmedium (Medium Access Control = MAC) von einem bestimmten Terminal pro Sub-Netzwerk gesteuert. Dieses Terminal wird als zentrales Terminal oder zentraler Controller (Central Controller = CC) bezeichnet. Diese Funktionen müssen nicht immer von demselben Terminal ausgeführt werden, sondern können von einem als zentraler Controller arbeitenden Terminal zu einem anderen dann als zentraler Controller agierenden Terminal übergeben werden. Der Vorteil eines zentralen Adhoc-Netzwerks ist, dass in diesem auf einfache Art eine Vereinbarung über die Dienstgüte (Quality of Service = QoS) möglich ist. Ein Beispiel für ein zentralisiertes Adhoc-Netzwerk ist ein Netzwerk, welches nach der HIPERLAN/2 Home Environment Extension (HEE) organisiert ist (vgl. Broadband Radio Access Networks (BRAN), HIPERLAN Type 2; "Functional Specifications; Data Link Control (DLC) Layer; Part 4: Extension for Home Environment", DTS 101 761-4, ETSI, Apr. 2000.).

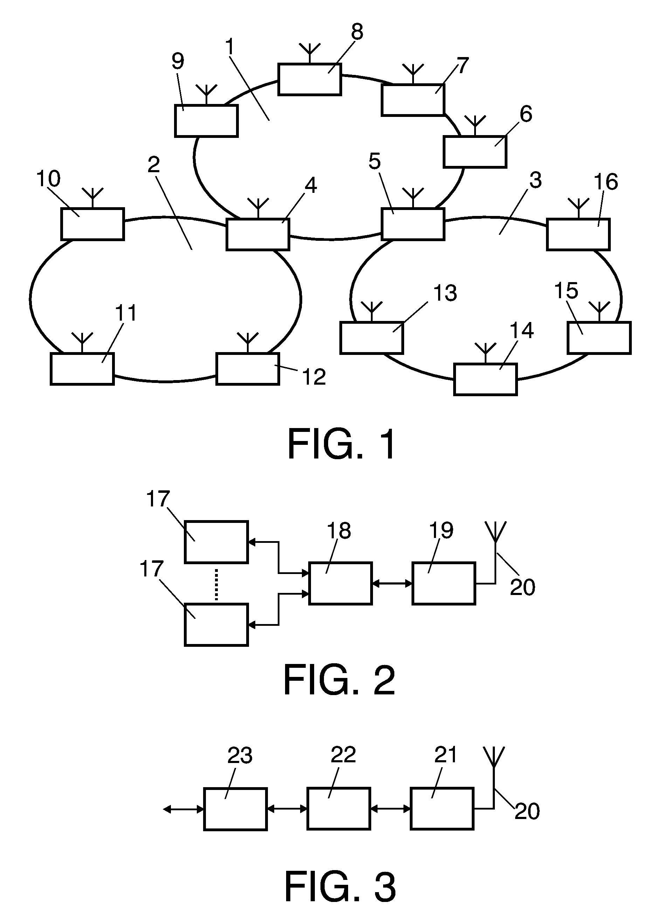

In Fig 1 ist ein Ausführungsbeispiel eines Adhoc-Netzwerks mit drei Sub-Netzwerken 1 bis 3 dargestellt, die jeweils mehrere Terminals 4 bis 16 enthalten. Bestandteil des Sub-Netzwerks 1 sind die Terminals 4 bis 9, des Sub-Netzwerks 2 die Terminals 4 und 10 bis 12 und des Sub-Netzwerks 3 die Terminals 5 und 13 bis 16. In einem Sub-Netzwerk tauschen die jeweils zu einem Sub-Netzwerk gehörenden Terminals Daten über Funkstrecken aus. Die in Fig 1 eingezeichneten Ellipsen geben den Funkbereich eines Sub-Netzwerks (1 bis 3) an, in dem zwischen den zu dem Sub-Netzwerk gehörenden Terminals eine weitgehend problemlose Funkübertragung möglich ist.

Die Terminals 4 und 5 werden Brücken-Terminals genannt, weil diese einen Datenaustausch zwischen zwei Sub-Netzwerken 1 und 2 bzw. 1 und 3 ermöglichen. Das Brücken-Terminal 4 ist für den Datenverkehr zwischen den Sub-Netzwerken 1 und 2 und das Brücken-Terminal 5 für den Datenverkehr zwischen den Sub-Netzwerken 1 und 3 zuständig.

Ein Terminal 4 bis 16 des lokalen Netzwerks nach Fig. 1 kann eine mobile oder feste Kommunikationsvorrichtung sein und enthält beispielsweise mindestens eine Station 17, eine Verbindungskontrollvorrichtung 18 und eine Funkvorrichtung 19 mit Antenne 20, wie dies Fig. 2 zeigt. Eine Station 17 kann beispielsweise ein tragbarer Computer, Fernsprecher usw. sein.

Eine Funkvorrichtung 19 der Terminals 6 bis 16 enthält, wie Fig. 3 zeigt, außer der Antenne 20 eine Hochfrequenzschaltung 21, ein Modem 22 und eine Protokollvorrichtung 23. Die Protokollvorrichtung 23 bildet aus dem von der Verbindungskontrollvorrichtung 18 empfangenen Datenstrom Paketeinheiten. Eine Paketeinheit enthält Teile des Datenstroms und zusätzliche von der Protokollvorrichtung 23 gebildete Steuerinformationen. Die Protokollvorrichtung verwendet Protokolle für die LLC-Schicht (LLC = Logical Link Control) und die MAC-Schicht (MAC = Medium Access Control). Die MAC-Schicht steuert den Mehrfachzugriff eines Terminals zum Funkübertragungsmedium und die LLC-Schicht führt eine Fluss- und Fehlerkontrolle durch.

Wie oben erwähnt, ist in einem Sub-Netzwerk 1 bis 3 eines zentralisierten Adhoc-Netzwerks ein bestimmtes Terminal zuständig für die Kontroll- und Managementfunktionen und wird als zentraler Controller bezeichnet. Der Controller arbeitet außerdem als normales Terminal im zugehörigen Sub-Netzwerk. Der Controller ist z.B. für die Registrierung von Terminals, die den Betrieb im Sub-Netzwerk aufnehmen, für den Vebindungsaufbau zwischen wenigstens zwei Terminals im Funkübertragungsmedium, für die Resourcenverwaltung und für die Zugriffssteuerung im Funkübertragungsmedium zuständig. So erhält beispielsweise ein Terminal eines Sub-Netzwerks nach der Registrierung und nach der Anmeldung eines Übertragungswunsches vom Controller Übertragungskapazität für Daten (Paketeinheiten) zugewiesen.

In dem Adhoc-Netzwerk können die Daten zwischen den Terminals nach einem TDMA-, FDMA- oder CDMA-Verfahren (TDMA = Time Division Multiplex Access, FDMA = Frequency Division Multiplex Access, CDMA = Code Division Multiplex Access) ausgetauscht werden. Die Verfahren können auch kombiniert werden. Jedem Sub-Netzwerk 1 bis 3 des lokalen Netzwerks sind eine Anzahl von bestimmten Kanälen zugeordnet, die als Kanalbündel bezeichnet werden. Ein Kanal ist durch einen Frequenzbereich, einen Zeitbereich und z.B. beim CDMA-Verfahren durch einen Spreizungscode bestimmt. Beispielsweise kann jedem Sub-Netzwerk 1 bis 3 zum Datenaustausch ein bestimmter, jeweils unterschiedlicher Frequenzbereich mit einer Trägerfrequenz fᵢ zur Verfügung stehen. In einem solchen Frequenzbereich können beispielsweise Daten mittels des TDMA-Verfahrens übertragen werden. Dabei kann dem Sub-Netzwerk 1 die Trägerfrequenz f₁, dem Sub-Netzwerk 2 die Trägsrfrequenz f₂ und dem Sub-Netzwerk 3 die Trägerfrequenz f₃ zugewiesen werden. Das Brücken-Terminal 4 arbeitet einerseits, um mit den anderen Terminals des Sub-Netzwerks 1 einen Datenaustausch durchführen zu können, mit der Trägerfrequenz f₁ und andererseits, um mit den anderen Terminals des Sub-Netzwerks 2 einen Datenaustausch durchführen zu können, mit der Trägerfrequenz f₂. Das zweite im lokalen Netzwerk enthaltene Brücken-Terminal 5, welches Daten zwischen den Sub-Netzwerken 1 und 3 überträgt, arbeitet mit den Trägerfrequenzen f₁ und f₃.

Wie oben erwähnt, hat der zentrale Controller beispielsweise die Funktion der Zugriffssteuerung. Das bedeutet, dass der zentrale Controller für die Bildung von Rahmen der MAC-Schicht (MAC-Rahmen) verantwortlich ist. Hierbei wird das TDMA-Verfahren angewendet. Ein solcher MAC-Rahmen weist verschiedene Kanäle für Steuerinformationen und Nutzdaten auf.

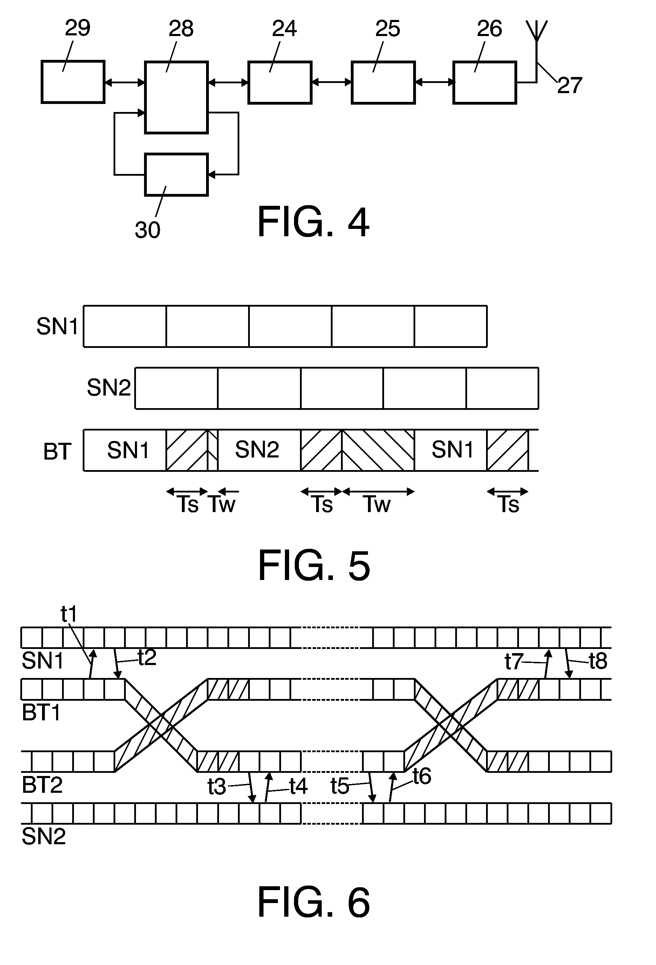

Ein Blockschaltbild eines Ausführungsbeispiels eines Brücken-Terminals ist in Fig 4 dargestellt. Die Funkschaltvorrichtung dieses Brücken-Terminals enthält jeweils eine Protokollvorrichtung 24, ein Modem 25 und eine Hochfrequenzschaltung 26 mit Antenne 27. Mit der Protokollvorrichtung 24 ist eine Funkschaltvorrichtung 28 verbunden, die des weiteren an eine Verbindungskontrollvorrichtung 29 und einer Zwischenspeichervorrichtung 30 angeschlossen ist. Die Zwischenspeichervorrichtung 30 enthält in dieser Ausführungsform ein Speicherelement und dient zur Zwischenspeicherung von Daten und ist als FIFO-Baustein realisiert (First In First Out), d.h. die Daten werden in der Reihenfolge aus der Zwischenspeichervorrichtung 30 gelesen, in der sie eingeschrieben worden sind. Das in Fig 4 dargestellte Terminal kann ebenfalls als normales Terminal arbeiten. An die Verbindungskontrollvorrichtung 29 angeschlossene Stationen, die nicht in Fig. 4 eingezeichnet sind, liefern dann über die Verbindungskontrollvorrichtung 29 Daten zur Funkschaltvorrichtung 28.

Das Brücken-Terminal nach der Fig 4 ist abwechselnd mit einem ersten und zweiten Sub-Netzwerk synchronisiert. Unter Synchronisation wird der gesamte Prozess der Einbindung eines Terminals im Sub-Netzwerks bis zum Austausch von Daten verstanden. Wenn das Brücken-Terminal mit dem ersten Sub-Netzwerk synchronisiert ist, kann es Daten mit allen Terminals und mit dem Controller dieses ersten Sub-Netzwerks austauschen. Werden von der Verbindungskontrollvorrichtung 29 Daten an die Funkschaltvorrichtung 28 geliefert, deren Bestimmungsort ein Terminal oder der Controller des ersten Sub-Netzwerks oder ein Terminal oder Controller eines anderen Sub-Netzwerks ist, die über das erste Sub-Netzwerk zu erreichen sind, leitet die Funkschaltvorrichtung diese Daten direkt an die Protokollvorrichtung 24 weiter. In der Protokollvorrichtung 24 werden die Daten solange zwischengespeichert, bis der vom Controller bestimmte Zeitabschnitt für die Übertragung erreicht ist. Wenn die von der Verbindungskontrollvorrichtung 29 ausgegebenen Daten zu einem Terminal oder dem Controller des zweiten Sub-Netzwerks oder zu einem anderen über das zweite Sub-Netzwerk zu erreichenden Sub-Netzwerk gesendet werden soll, muss die Funkübertragung bis zu dem Zeitabschnitt verzögert werden, in dem das Brücken-Terminal mit dem zweiten Sub-Netzwerk synchronisiert ist. Daher leitet die Funkschaltvorrichtung die Daten, deren Bestimmungsort im zweiten Sub-Netzwerk liegt oder deren Bestimmungsort über das zweite Sub-Netzwerk zu erreichen ist, zu der Zwischenspeichervorrichtung 30, welche die Daten solange zwischenspeichert, bis das Brücken-Terminal mit dem zweiten Sub-Netzwerk synchronisiert ist.

Wenn Daten von einem Terminal oder dem Controller des ersten Sub-Netzwerks vom Brücken-Terminal empfangen werden und deren Bestimmungsort ein Terminal oder der Controller des zweiten Sub-Netzwerks oder ein Terminal oder Controller eines anderen über das zweite Sub-Netzwerk zu erreichenden Sub-Netzwerks ist, werden diese Daten ebenfalls bis zur Synchronisation mit dem zweiten Sub-Netzwerk in der Zwischenspeichervorrichtung 30 abgelegt. Daten, deren Bestimmungsort eine Station des Brücken-Terminals ist, werden direkt über die Funkschaltvorrichtung 28 zur Verbindungskontrollvorrichtung 29 gegeben, die dann die empfangenen Daten zu der gewünschten Station leitet. Daten, deren Bestimmungsort weder eine Station des Brücken-Terminals noch ein Terminal oder Controller des zweiten Sub-Netzwerks ist, werden beispielsweise zu einem weiteren Brücken-Terminal gesendet.

Nach dem Synchronisationswechsel des Brücken-Terminals vom ersten zum zweiten Sub-Netzwerk werden die in der Zwischenspeichervorrichtung 30 befindlichen Daten in der Einschreibreihenfolge wieder aus der Zwischenspeichervorrichtung 30 gelesen. Anschließend können während der Dauer der Synchronisation des Brücken-Terminals mit dem zweiten Sub-Netzwerk alle Daten, deren Bestimmungsort ein Terminal oder der Controller des zweiten Sub-Netzwerks oder ein anderes über das zweite Sub-Netzwerk zu erreichende Sub-Netzwerk ist, sofort von der Funkschaltvorrichtung 28 zur Protokollvorrichtung 24 weitergegeben und nur die Daten, deren Bestimmungsort ein Terminal oder der Controller des ersten Sub-Netzwerks oder ein anderes über das erste Sub-Netzwerk zu erreichende Sub-Netzwerk ist, in der Zwischenspeichervorrichtung 30 gespeichert werden.

Die MAC-Rahmen von zwei Sub-Netzwerken SN1 und SN2 sind in der Regel nicht synchronisiert. Daher ist ein Brücken-Terminal BT mit einem Sub-Netzwerk SN1 oder SN2 nicht nur während einer Umschaltzeit Ts sondern auch während einer Wartezeit Tw nicht verbunden. Dies lässt sich aus Fig. 5 entnehmen, welche eine Folge von MAC-Rahmen der Sub-Netzwerke SN1 und SN2 und die MAC-Rahmenstruktur des Brücken-Terminals BT zeigt. Die Umschaltzeit Ts ist diejenige Zeit, die erforderlich ist, damit das Brücken-Terminal sich mit einem Sub-Netzwerk synchronisieren kann. Die Wartezeit Tw gibt die Zeit zwischen dem Ende der Synchronisation mit dem Sub-Netzwerk und dem Beginn eines neuen MAC-Rahmens dieses Sub-Netzwerks an.

Das Brücken-Terminal BT, das beispielsweise mit dem ersten Sub-Netzwerk SN1 synchronisiert ist, sendet dem Controller des ersten Sub-Netzwerks SN1 vor dem Wechsel zum zweiten Sub-Netzwerk SN2 eine Nachricht (Abwesenheits-Nachricht) zu, in der dem Controller des ersten Sub-Netzwerks SN1 die Dauer der Abwesenheit oder die Dauer der Verbindung mit dem zweiten Sub-Netzwerk SN2 mitgeteilt wird Erst wenn der Controller des ersten Sub-Netzwerks SN1 mit einer Bestätigungs-Nachricht antwortet, wechselt das Brücken-Terminal BT die Trägerfrequenz und versucht sich mit dem zweiten Sub-Netzwerk zu synchronisieren. Hierbei sendet das Brücken-Terminal zuerst eine Nachricht (Anwesenheits-Nachricht) zum Controller des zweiten Sub-Netzwerkes SN2, mit der mitgeteilt wird, dass sich das Brücken-Terminal BT mit dem zweiten Sub-Netzwerk SN2 synchronisieren möchte. Der Controller des zweiten Sub-Netzwerks SN2 antwortet mit einer Bestätigungs-Nachricht. Der gleiche Vorgang wird durchgeführt, wenn das Brücken-Terminal wieder zurück zum ersten Sub-Netzwerk SN1 wechselt.

Die Abwesenheits-, die Anwesenheits- und die Bestätigungs-Nachricht kann jeweils über einen Verteil- oder Broadcast- oder Zufallszugriffs-Kanal übertragen werden. Nachdem eine Bestätigungs-Nachricht auf einen Abwesenheits-Nachricht von einem Controller gesendet worden ist, startet dieser einen Zählvorgang zur Zählung der MAC-Rahmen. Nach einer bestimmten von dem abwesenden Brücken-Terminal angegebenen Anzahl von MAC-Rahmen, wird sich das bis dahin abwesende Brücken-Terminal mit einer Anwesenheits-Nachricht wieder melden. Durch die Kenntnis des Zeitraums der Abwesenheit des Brücken-Terminals, kann der Controller sich rechtzeitig auf veränderte Lastbedingungen und Verkehrsverhältnisse im Sub-Netzwerk einstellen.

Die Dauer der Abwesenheit bzw. Anwesenheit des Brücken-Terminals in einem Sub-Netzwerk kann jeweils gleich aber auch unterschiedlich sein. Das hängt von den jeweiligen Lastbedingungen in den beiden Sub-Netzwerken ab.

Um bei bestimmten Lastsituationen den Datendurchsatz zwischen zwei Sub-Netzwerken zu erhöhen, ist erfindungsgemäß vorgesehen, dass wenigstens ein zweites Brücken-Terminal zwei Sub-Netzwerke miteinander verbindet. Hierzu kann ein Controller eines Sub-Netzwerks ein Terminal zum Einsatz als Brücken-Terminal auswählen. Falls der Datendurchsatz weiter erhöht werden soll, können weitere Terminals als Brücken-Terminals eingesetzt werden.

Aus der Fig 6 lassen sich für diesen Fall eine beispielhafte Folge von MAC-Rahmen für die beiden Sub-Netzwerke SN1 und SN2 und die beiden Brücken-Terminals BT1 und BT2 entnehmen. In Fig 6 ist zu Beginn des Ausschnittes von MAC-Rahmen das Brücken-Taminal BT1 mit dem Sub-Netzwerk SN1 und das Brücken-Terminal BT2 mit dem Sub-Netzwerk SN2 synchronisiert. Zu einem Zeitpunkt t1 sendet das Brücken-Terminal BT1 eine Abwesenheits-Nachricht an den Controller des Sub-Netzwerks SN1, welches den Empfang bestätigt (Zeitpunkt t2). Anschließend ist das Brücken-Terminal eine bestimmte Zeit weder mit dem ersten noch mit dem zweiten Sub-Netzwerk SN1 bzw. SN2 synchronisiert. Zu einem Zeitpunkt t3 sendet das Brücken-Terminal BT1 eine Anwesenheits-Nachricht an den Controller des zweiten Sub-Netzwerks SN2, der mit einer Bestätigung Nachricht den Empfang zum Zeitpunkt t4 quittiert. Nach einer bestimmten Anzahl von MAC-Rahmen will das Brücken-Terminal BT1 wieder zum ersten Sub-Netzwerk SN1 wechseln. Diese Wechselphase wird mit einer Abwesenheits-Nachricht (t5) eingeleitet. Nach der Bestätigungs-Nachricht (t6) beginnt die erneute Synchronisation mit dem ersten Sub-Netzwerk SN1. Diese wird durch die Anwesenheits-Nachricht (t7) vom ersten Brücken-Taminal BT1 und eine Bestätigungs-Nachricht zum Zeitpunkt t8 vom ersten Sub-Netzwerk SN1 abgeschlossen. Die für das Brücken-Terminal BT1 beschriebenen Vorgänge laufen analog beim Brücken-Terminal BT2 ab.

Die beiden Brücken-Terminals sind in der Regel abwechselnd mit den beiden Sub-Netzwerken verbunden. Es ist prinzipiell aber auch möglich das beide Brücken-T erminals bei bestimmten Verkehrsverhältnissen aber auch eine gewisse Dauer bei einem einzigen Sub-Netzwerk anwesend sind Wie oben schon erwähnt kann die Periode der Anwesenheit bzw. Abwesenheit der beiden Brücken-Terminals gleich oder auch unterschiedlich sein.

Es ist auch möglich, dass mehr als zwei Brücken-Terminals mit den zwei Sub-Netzwerken verbunden sind Ferner können die Brücken-Terminals auch mehr als zwei Sub-Netzwerke miteinander verbinden.

## Patentansprüche

1. Netzwerk mit mehreren Sub-Netzwerken, die jeweils Terminals enthalten und die untereinander über wenigstens ein Brücken-Terminal Daten austauschen,
wobei ein zur Steuerung eines Sub-Netzwerks vorgesehener Controller zur Einbindung wenigstens ein weiteres Brücken-Terminal zur Übertragung von Daten zwischen wenigstens zwei Sub-Netzwerken vorgesehen ist und
wobei die Brücken-Terminals während bestimmter Perioden mit nur einem Sub-Netzwerk synchronisiert sind.

2. Netzwerk nach Anspruch 1,
**dadurch gekennzeichnet,**
**dass** ein Brücken-Terminal jeweils über eine weitgehend gleiche Zeitdauer mit wenigstens zwei Sub-Netzwerken synchronisiert ist.

3. Netzwerk nach Anspruch 1,
**dadurch gekennzeichnet,**
**dass** ein Brücken-Terminal vor dem Wechsel von einem Sub-Netzwerk zu einem anderen Sub-Netzwerk zur Sendung einer Abwesenheits-Nachricht an ein als Controller arbeitendes Terminal des Sub-Netzwerk vorgesehen ist, mit dem es synchronisiert ist, und
**dass** ein Brücken-Terminal nach dem Wechsel der Sub-Netzwerke eine Anwesenheits-Nachricht an ein als Controller arbeitendes Terminal des Sub-Netzwerk vorgesehen ist, mit dem es dann synchronisiert ist.

4. Brücken-Terminal in einem Netzwerk mit mehreren Sub-Netzwerken, die jeweils Terminals enthalten, das zusammen mit wenigstens einem weiteren Brücken-Terminal zum Austausch von Daten zwischen den Sub-Netzwerken vorgesehen ist und das während bestimmter Perioden mit nur einem Sub-Netzwerk synchronisiert ist.
